# EUROPEAN PATENT SPECIFICATION

(11) **EP 1 836 250 B1**
(45) Date of publication and mention of the grant of the patent: **10.03.2010**
(21) Application number: 05852635.1
(22) Date of filing: 01.12.2005
(51) Int. Cl.: C08K 5/523, C08J 9/00, C07F 9/12, C07F 9/02

(54) **NON-SCORCH FLAME RETARDED POLYURETHANE FOAM**
SCORCHFESTER FLAMMGESCHÜTZTER POLYURETHANSCHAUMSTOFF
MOUSSE POLYURETHANE IGNIFUGEE

(30) Priority: 02.12.2004 US 632678 P
(43) Date of publication of application: 26.09.2007
(73) Proprietor: CHEMTURA CORPORATION, Middlebury, CT 06749 (US)
(72) Inventor: FALLOON, Stephen, B., Lafayette, IN 47909 (US); PHILLIPS, Matthew, D., Camden, IN 46917 (US); ROSE, Richard, West Lafayette, IN 47906 (US)
(74) Representative: Serravalle, Marco
(86) International application number: PCT/US2005/043471
(87) International publication number: WO 2006/060573

(56) References cited:
- EP-A- 0 617 079
- WO-A-01/18088
- WO-A-96/11996
- US-A- 4 469 644
- US-A- 4 565 833
- US-A- 5 164 417
- US-A- 5 547 614
- US-A1- 2004 171 722

## Description

### BACKGROUND AND SUMMARY

Discoloration of flexible polyurethane foams, commonly called scorch, is an issue to foam producers. In some markets customers will not accept foams that have internal discoloration. Scorch is thought to be caused by thermal and oxidative degradation of the polyurethane foam. Scorch is generally observed in the center of foam blocks where internal temperatures can remain high for relatively long periods of time.

Studies suggest that several factors can contribute to the generation of scorch in a foam block. One factor may be the presence of mineral acids HBr and HCl that formed during foam oxidation resulting in scorch. Flame retardants may be a source of these acids. It is thought that flame retardants having relatively low thermal stability could dehydrohalogenate during foam processing, generating the detrimental mineral acids. In response, flame retardant manufacturers focused on aromatically bound bromine, believed to offer more thermally stable flame retardants.

Flame retardants based upon pentabromodiphenyl oxide when used in polyurethane foams have successfully reduced scorch. Recently, phosphorous based "halogen free" flame retardants have been used in greater volumes as alternatives for pentabromodiphenyl oxide.

Phosphate esters have been used neat or in blends as flame retardants for flexible polyurethane foam. As a component in a blend, as the concentration in the blends has increased up to and including 100%, phosphate based flame retardants, scorch emerged as an issue in polyurethane foam.

Further investigation revealed that these nominally phosphate flame retardants contained varying levels of phosphites. Applicants found that by reducing the phosphite content of the phosphate ester flame retardant the quality of polyurethane foam is improved, particularly with respect to scorch of the foam.

### DETAILED DESCRIPTION

The invention relates to a flame retardant polyurethane foam composition and a method of making of flame retarding polyurethane foam. The composition comprises an otherwise flammable polyurethane foam and a flame retardant additive that has low phosphite content and low content of impurities resulting from the decomposition of phosphites. The flame retardant additive is a blend of a phosphate ester with another flame retardant additive.

Phosphites may be generated during synthesis of phosphate ester flame retardants. Typical preparation of a phosphate ester uses phosphorous oxychloride (POCl₃) as a raw material. POCl₃ is reacted with phenol to prepare triphenyl phosphate, or alkyl substituted phenol to prepare alkyl-substituted triphenyl phosphate. A scheme for the preparation is disclosed in US Patent 4,093,680, incorporated by reference. POCl₃ often includes phosphorous trichloride (PCl₃) as an impurity. The presence of PCl₃ impurity in turn may lead to a phosphite by-product during the synthesis of the preferred phosphate ester. Applicants found that by reducing the PCl₃ reactant concentration in the POCl₃ raw material, the phosphite content may be lowered. Perceived lower hydrolytic and thermal stability of phosphites as compared to corresponding phosphates may be related to the observed scorch in the resulting foams.

One or more of the phenyl groups of the phosphate ester may be substituted, preferably with one or more linear or branched alkyl group of from I to 6 carbon atoms. Preferred substituents are isopropyl and isobutyl groups.

Scorch had been thought to be caused by thermal and oxidative degradation of the polyurethane foam and most likely to be observed in foams that contain labile halogens or in the case of halogen free flame retardants those that contain an elevated level of phosphite or its decomposition products. Researchers in the industry have developed a quantitative test to determine the amount of scorch contained in a polyurethane foam which is disclosed in detail by M.J. Reale and B.A. Jacobs in "A Rapid Predictive Test for Urethane Foam Scorch" in the Journal of Cellular Plastics, Vol. 15(6), pages 311-314, Nov/Dec. 1979, the disclosure of which is expressly incorporated by reference herein. Stated generally, the test requires combining reactants in a small box to create a foam bun. The foam bun is placed in a microwave oven for a predetermined amount of time required to generate a temperature in the center of the bun which is intended to simulate the temperature in the center of a larger, commercial-sized bun. When the foam has cooled to room temperature a piece of foam is cut from the center of the bun and the color is measured on a HunterLab Color/Difference Meter from Hunter Associates Laboratory, Inc. in Reston, Virginia.

Using the scorch measuring method developed by Reale and Jacobs, it has been observed that foams prepared with phosphate esters show unacceptable signs of scorch when the phosphite content in the phosphate ester is above 0.33 area % based on NMR integration. The phosphite content can be measured by phosphorous (³¹P) NMR. The phosphite peak studied for the experiment was at 155 parts per million (ppm). Generally, phosphites are found in the region of 125-160 ppm. ³¹P NMR measurements were conducted on a Varian 200 MHz NMR. The samples were evaluated as solutions in deuterated chloroform and referenced with phosphoric acid. The phosphite impurities were observed at 155.11ppm as opposed to the typical phosphate resonances which appeared in area of -24ppm to -40ppm. The relative intensities of the peaks were measured based on integration of the specified peaks and then normalized by comparing to a known quantity of an internal standard placed in each sample. The internal standard was phosphoric acid.

Typically flexible polyurethane foam is open-cell. Such foam is prepared from difunctional isocyanate such as toluene di-isocyanate or methylene di-isocyanate, a trifunctional polyol having molecular weight on the order of 3000, and water. Useful catalysts include an amine catalyst such as triethanol amine, a tin catalyst such as stannous octanoate and a silicone surfactant such as L 620 produced by Osi Specialties. Since August 1, 2003, Osi is a unit of GE Silicones, Wilton CN 06897, USA. Blowing agents such as chlorofluoroalkanes (Freon^{™}), and CO₂ resulting from the reaction product of isocyanate and added water. Flame retardants are typically added to the polyurethane reaction ingredients. Flame retardant performance standards typically followed for flexible polyurethane foams are the California bulletin 117 combustibility test part A and part D for household furnishings, and the United States Motor Vehicle Safety Standard-302 (MVSS-302) for motor vehicle seating and other comfort applications of flexible polyurethane foam.
Typically rigid polyurethane foam is closed-cell prepared from a high functionality polyol having a molecular weight of about 500, and poly(methylene)-poly(phenyl isocyanate) having a functionality of about 2.7. Specific flame retardants as described are added in the following examples.

### Examples 1-4

Table 1 illustrates the results of a comparison in the amount of phosphite present and the level of scorch for three flame retardant foams and one non-flame retardant foam. The foam was prepared from the recipe according to Example 10.

**Table 1**

| Flame Retardant | Area% Phosphite | Triphenyl phosphite by GC | Scorch | |
|---|---|---|---|---|
| | | | DE | YID |
| Example 1 | | | | |
| Butylated Triarylphosphate | 0.42 | 5ppm | 7.63 | 12.02 |
| Example 2 | | | | |
| Butylated Triarylphosphate | 0.33 | 2ppm | 4.20 | 3.16 |
| Example 3 | | | | |
| Isopropylated Triarylphosphate | 0 | <0.5 ppm | 5.17 | 0.94 |
| Example 4 | | | | |
| Non-Flame Retardant | | <0.5 ppm | 3.29 | -0.09 |

Quantification of phosphite content by NMR is described above. Gas chromatography analysis of phosphite content was determined using an Agilent gas chromatograph model 6890N having on column injection. The column was a Restek Rtx-1MS x 0.32 mm id x 0.5 micron film. Temperatures were inlet: cool on-column with oven track, detector 250° C The oven temperature program was 40° C initial temperature for 2 minutes followed by an increase of temperature at the rate of 15° C per minute to 310° C. Temperature was held at 310° C for 10 minutes. Triphenylphosphite peak eluted at 15.7 minutes. The identity of triphenylphosphite was confirmed by comparing retention time to a known standard and by gas chromatography/mass spectrometery.
The flame retardant for Examples 1-3 is entirely of the phosphate variety indicated. YID is the yellowness index which is described in detail in "Standard Practice for Calculating Yellowness and Whiteness Indices from Instrumentally Measured Color Coordinates" ASTM Standard E 313-00 (American Society for Testing Materials) which is expressly incorporated by reference herein. DE or Δ*E* is a measure of the change in color of parameters L, a, and b as compared to a standard white tile as described in the ASTM Standard E 313-00. As shown in Table 1, as the level of phosphite increases the level of scorch (YID) increases.

### Examples 5 - 8

Referring now to Table 2, shown below, isopropylated triaryl phosphate, as shown in Table I was determined to have no phosphite by NMR. The phosphite free isopropylated triaryl phosphate was then blended 50/50 with a tetrabromobenzoate. Triphenylphosphite was spiked into formulations of polyurethane foam prepared from the recipe of Example 10 to determine the effect of the phosphite. The flame retardant was stored at 45° C for 12 hours prior to use to ensure that decomposition products of the phosphite were present. The data again shows that as the phosphite level increases the amount of scorch (YID) increases as well.

**Table 2**

| Flame Retardant | Wt % Phosphite | Scorch | |
|---|---|---|---|
| | | DE | YID |
| Example 5 | | | |
| Benzoate/Phosphate Foam | 0.5 | 6.32 | 10.54 |
| Example 6 | | | |
| Benzoate/Phosphate Foam | 0.1 | 3.90 | 6.3 |
| Example 7 | | | |
| Benzoate/Phosphate Foam | 0 | 3.53 | 1.82 |
| Example 8 | | | |
| Non-Flame Retardant Foam | | 3.29 | -0.09 |

### Example 9-11

In the present invention, the flame retardant additive is comprised of one or more compounds from group A which may be blended with compounds from group B, and the compounds from group A may contribute between 1-100% of the blend. The blend of A and B will have an unusually low content of phosphite and or its decomposition products of less than 0.33 area % by NMR.

### Group A

The flame retardant additives in Group A are comprised of one of an aryl, or alkaryl phosphate that is optionally halogenated and prepared from a POCl₃ source that has unusually low PCl₃ content. Group A includes one or more phosphorous based flame retardants having at least about 5 wt.% phosphorus. Compounds having less than about 5 wt.% phosphorus may also be useful, but it is believed that excessively high amounts of such compounds would be needed to provide the necessary level of flame retardancy. Included in the description of suitable phosphorus sources is the class phosphates. These may contain various aryl or alkyl aryl groups as long as the size of the groups does not dilute the phosphorus content below about 5 wt.%. The component from Group A may be monomeric, dimeric, or oligomeric and may contribute between 1-100% of the blend.

Group A also includes phosphorus-containing additives including phosphates having either one or two phosphorus atoms per molecule. Examples include tricresyl phosphate, trixylyl phosphate, butylated triphenyl phosphate, isopropylated triphenyl phosphate, triphenyl phosphate, cresyl diphenyl phosphate, resorcinol bis(diphenyl phosphate), bisphenol A bis(diphenyl phosphate).

### Group B

The flame retardant additives in Group B are comprised of halogenated flame retardants containing greater than (>) 30% halogen. Compounds having less than about 30 wt.% halogen may also be useful, but it is believed that excessively high amounts of such compounds would be needed to provide the necessary level of flame retardancy. Included in the description ofsuitable halogen containing flame retardants are compounds containing various halogenated alkyl, aryl or alkyl aryl groups as long as the size of the groups does not dilute the halogen content below about 30 wt.%. The components of Group B may be monomeric, dimeric, or oligomeric and may contribute between 0-99% of the blend. Examples of halogen-containing additives include brominated aromatic benzoates and phthalates.

Typical laboratory hand mix flexible polyurethane foam was prepared using the formulations listed below in Table 3. Lab preparation yielded flexible polyurethane foams with densities as described in the following tables. The flame retardant used in the prepared foams and load level is shown in Tables 3-4 for the different foam densities. The scorch data for the 24 kg/m³ foam is shown in Table 5. The flame retardant component of the polyurethane foam is as indicated: a butylated triaryl phosphate or a blend equal parts by weight of 2-ethylhexyl-3, 4, 5, 6-tetrabromobenzoate mixed with an isopropylated triaryl phosphate. All components are expressed in parts by weight per hundred of polyol (php). The foams meet the California bulletin 117 combustibility test part A and part D, and the requirements of the MVSS 302 standard for foam in automotive applications as shown in Table 4.

**Table 3**

| | **Example 9** | **Example 10** | **Example 11** |
|---|---|---|---|
| **Foam Density** | 19 Kg/m³ | 24 Kg/m³ | 29 Kg/m³ |
| **Polyether Polyol (56.6 OH index)** | 100 | 100 | 100 |
| **Water** | 6.2 | 4.4 | 3.3 |
| **Flame Retardant Additive** | See Table 4 | See Table 4 | See Table 4 |
| **Amine Catalyst** | 0.48 | 0.5 | 0.5 |
| **Silicone Surfactant** | 1 | 1 | 1 |
| **Tin Catalyst** | 0.26 | 0.26 | 0.26 |
| **Toluene di-isocyanate** | 75.9 | 56.7 | 45.1 |

**Table 4**

| Minimum Flame Retardant Loading to Pass MVSS-302 and Cal 117 standards | | | | | | | | |
|---|---|---|---|---|---|---|---|---|
| | Flame Retardant Additive expressed as php | | | | | | | |
| Example / Foam Density | Butylated Triarylphosphate¹ (0.42 area % phosphite) | | Butylated Triarylphosphate² (0.33 area % phosphite) | | Benzoatc/Phosphate ³ (0.1 wt % phosphite) | | Benzoate/Phosphate ⁴ (0 wt % phosphite) | |
| | MVSS-302 | Cal 117 | MVSS-302 | Cal 117 | MVSS-302 | Cal 117 | MVSS-302 | Cal 117 |
| **Example 9** | | | | | | | | |
| 19 Kg/m³ Density | 32 | 37 | -- | -- | 23 | 21 | 23 | 21 |
| **Example 10** | | | | | | | | |
| 24 Kg/m³ Density | 18 | 28 | 18 | 23 | 14 | 15 | 14 | 15 |
| **Example 11** | | | | | | | | |
| 29 Kg/m³ Density | 7 | 10 | 16 | 16 | 4 | 9 | 4 | 9 |

| | | | | | | | | |
|---|---|---|---|---|---|---|---|---|
| ¹ Phosphite content of Example 1. ² Phosphite content of Example 2. ³ Phosphite content of Example 6. ⁴ Phosphite content of Example 7. | | | | | | | | |

**Table 5**

| Scorch Data: 24 Kg/m³ Foam of the recipe of Example 10 | | | |
|---|---|---|---|
| **Flame Retardant Additive** | **YID** | Δ**E** | **Phosphite content** |
| Butylated Triarylphosphate ⁵ (0.42 area % phosphite) | 12.20 | 7.63 | 0.42 (5 ppm triphenyl phosphite) |
| Butylated Triarylphosphate ⁶ (0.33 area % phosphite) | 3.16 | 4.20 | 0.33 (2 ppm triphenyl phosphite) |
| Benzoate/Phosphate ⁷ (0.1 wt % phosphite) | 6.31 | 3.90 | 0.1 (<0.5 ppm triphenyl phosphite) |
| Benzoate/Phosphate (0 wt % phosphite)⁸ | 1.82 | 3.53 | 0 |
| Non-Flame Retardant Foam | -0.09 | 3.29 | 0 |

| | | | |
|---|---|---|---|
| ⁵ Phosphite content of Example 1. ⁶ Phosphite content of Example 2. ⁷ Phosphite content of Example 6. ⁸ Phosphite content of Example 7. | | | |

As shown in Table 5, scorch increases with as the phosphite content increases in flame retardant additives used in flexible polyurethane foams. Foams having a YID of 2.5 or less have generally been found to be acceptable to consumers in the industry. Accordingly, flame retardant additives containing less then 0.33 % area based on NMR integration can be use to produce flame retardant flexible polyurethane foams with acceptable levels of scorch.

### Examples 12 - 19

Examples 12 - 19 were prepared from the flexible polyurethane foam according to Example 10. The polyurethane foam incorporated constant loading of flame retardant having a varying amount of phosphite. The flame retardant comprises 7.5php (parts per hundred parts polyol) tetrabromobenzoate and 7.5 php isopropylated triaryl phosphate ester. Phosphite levels were achieved by adding known phosphite content to phosphite free flame retardant.

**Table 6**

| Example | Phosphite | Flame Retardant | DE | YID 1925 |
|---|---|---|---|---|
| 12 | 2% by wt | 15php | 4.76 | 7.89 |
| 13 | 1% | 15php | 4.15 | 6.03 |
| 14 | 0.20% | 15php | 4.03 | 6.37 |
| 15 | 0.10% | 15php | 4.25 | 6.38 |
| 16 | 0.05% | 15php | 5.34 | 6.4 |
| 17 | 0.02% | 15php | 4.93 | 5.04 |
| 18 | 0.01% | 15php | 4.65 | 1.74 |
| 19 | 0% | 15 php | 3.92 | 0.75 |

The yellowing index shows a material reduction at 0.02% phosphite (200 ppm) content in the flame retardant, with a significant reduction at 100 ppm.

## Claims

1. A flame retardant composition consisting of:
A) an aryl or alkylaryl phosphate ester prepared from a POCl₃ source; and
B) halogenated flame retardants containing greater than 30 wt % halogen;
wherein the blend of A and B will have less than 0.33 area % phosphite based on NMR integration as measured by ³¹P NMR in the region of 125 to 160 ppm.

2. The flame retardant composition of claim 1 wherein the aryl or alkylaryl phosphate ester is selected from tricresyl phosphate, trixylyl phosphate, butylated triphenyl phosphate, isopropylated triphenyl phosphate, triphenyl phosphate, cresyl diphenyl phosphate.

3. A polyurethane foam reaction mixture comprising the composition of claim 1.

4. A polyurethane foam reaction mixture comprising the composition of claim 2.

5. A polyurethane foam comprising the composition of claim 1.

6. A polyurethane foam comprising the composition of claim 2.

7. The polyurethane foam of claim 5 wherein the foam comprises open cells.

8. The polyurethane foam of claim 5 wherein the foam comprises closed cells.

## Patentansprüche

1. Eine Flammschutzmittelzusammensetzung bestehend aus:
A) einem aus einer POCl₃-Quelle hergestellten Aryl- oder Alkylarylphosphatester; und
B) halogenierten Flammschutzmitteln enthaltend mehr als 30 Gew.-% Halogen;
worin die Mischung aus A und B weniger als 0,33 Flächen-% Phosphit, basierend auf NMR-Integration wie gemessen durch ³¹P-NMR im Bereich von 125 bis 160 ppm, aufweist.

2. Die Flammschutzmittelzusammensetzung des Anspruchs 1, worin der Aryl- oder Alkylarylphosphatester ausgewählt ist aus Tricresylphosphat, Trixylylphosphat, butyliertem Triphenylphosphat, isopropyliertem Triphenylphosphat, Triphenylphosphat, Cresyldiphenylphosphat.

3. Eine Polyurethanschaumstoffreaktionsmischung enthaltend die Zusammensetzung des Anspruchs 1.

4. Eine Polyurethanschaumstoffreaktionsmischung enthaltend die Zusammensetzung des Anspruchs 2.

5. Ein Polyurethanschaumstoff enthaltend die Zusammensetzung des Anspruchs 1.

6. Ein Polyurethanschaumstoff enthaltend die Zusammensetzung des Anspruchs 2.

7. Der Polyurethanschaumstoff des Anspruchs 5, worin der Schaumstoff offen Zellen enthält.

8. Der Polyurethanschaumstoff des Anspruchs 5, worin der Schaumstoff geschlossene Zellen enthält.

## Revendications

1. Composition retardatrice de flamme consistant en :
A) un aryl ou alkylaryl phosphate ester préparé à partir d'une source de POCl₃ ; et
B) des retardateurs de flamme halogénés contenant plus de 30 % en poids d'halogène ;
dans laquelle le mélange de A et de B aura moins de 0,33 % en surface de phosphite, sur la base d'une intégration RMN, telle que mesurée par RMN ³¹P dans la région de 125 à 160 ppm.

2. Composition retardatrice de flamme selon la revendication 1 dans laquelle l'aryl ou alkylaryl phosphate ester est choisi parmi le phosphate de tricrésyle, le phosphate de trixylyle, le phosphate de triphényle butylé, le phosphate de triphényle isopropylé, le phosphate de triphényle, le phosphate de crésyle et de diphényle.

3. Mélange réactionnel de mousse de polyuréthane comprenant la composition selon la revendication 1.

4. Mélange réactionnel de mousse de polyuréthane comprenant la composition selon la revendication 2.

5. Mousse de polyuréthane comprenant la composition selon la revendication 1.

6. Mousse de polyuréthane comprenant la composition selon la revendication 2.

7. Mousse de polyuréthane selon la revendication 5, dans laquelle la mousse comprend des cellules ouvertes.

8. Mousse de polyuréthane selon la revendication 5, dans laquelle la mousse comprend des cellules fermées.
